# EUROPÄISCHE PATENTSCHRIFT

(11) **EP 0 689 351 B1**
(45) Veröffentlichungstag und Bekanntmachung des Hinweises auf die Patenterteilung: **29.09.1999**
(21) Anmeldenummer: 95109692.4
(22) Anmeldetag: 22.06.1995
(51) Int. Cl.: H04N 5/63

(54) **Schaltungsanordnung für den Wartebetrieb eines fernbedienbaren Gerätes**
Circuit for the standby operation of a remote control apparatus
Circuit pour le mode de veille d'un dispositif de télécommande

(30) Priorität: 23.06.1994 DE 4421869
(43) Veröffentlichungstag der Anmeldung: 27.12.1995
(73) Patentinhaber: NOKIA TECHNOLOGY GmbH, 75175 Pforzheim (DE)
(72) Erfinder: Erbach, Gerd, D-75175 Pforzheim (DE)

(56) Entgegenhaltungen:
- DE-A- 3 525 942
- DE-A- 4 237 634
- DE-U- 9 309 814
- RADIO FERNSEHEN ELEKTRONIK, Bd. 43, Nr. 2, 1.Februar 1994 Seite 53 XP 000478211 'POWER-MANAGEMENT: 0,1 W BEI STAND-BY'
- PATENT ABSTRACTS OF JAPAN vol. 016 no. 154 (E-1190) ,15.April 1992 & JP-A-04 006969 (MATSUSHITA ELECTRIC IND CO LTD) 10.Januar 1992,

## Beschreibung

Die Erfindung betrifft ein fernbedienbares elektronisches Gerät wie z. B. einen Fernsehempfänger oder Hörrundfunkempfänger, dessen Netzteil im Wartebetrieb über eine Fernbedienung stromlos geschaltet wird.
Geräte dieser Art weisen in der Regel drei verschiedene Betriebszustände auf. Diese sind der ausgeschaltete Zustand, bei dem keine Baugruppe Netzspannung erhält, der Wartebetrieb (Stand-by) und der aktive Zustand, bei dem das Gerät voll funktionsfähig ist.
Mittels einer Fernbedienung kann zwischen den beiden letztgenannten Betriebszuständen umgeschaltet werden. Im Wartebetrieb muß zumindest ein Fernbedienempfänger und eine Startschaltung zum Einschalten des Gerätes in den aktiven Zustand mittels der Fernbedienung durch Energiezufuhr empfangsbereit gehalten werden. Üblicherweise ist dafür entweder, wie in der Druckschrift DE-C2-33 43 031 beschrieben wird, ein Bereitschaftsnetzteil mit einem Transformator vorhanden oder das Netzteil stellt auch im Wartebetrieb Energie bereit und wird so betrieben, daß das Gerät nur minimal elektrische Energie aufnimmt. Bei einem solchen Gerät können problemlos der Fernbedienempfänger und die Startschaltung zum Einschalten des Gerätes mit der übrigen Elektronikschaltung leitend verbunden sein, da eine Isolation vom Energienetz mittels Transformatoren realisiert wird. Alle Fernbediensignale können somit von einem Signalprozessor identifiziert, umgesetzt und an die verschiedenen Funktionseinheiten des Gerätes weitergeleitet werden.

Diese Art von Schaltung benötigt jedoch im Wartebetrieb eine elektrische Leistung, die mit einem Wert von 2 bis 10 Watt für einen Dauerbetrieb unbefriedigend hoch ist.

Ein Fernsehgerät, bei dem das Schaltnetzteil während des Wartebetriebs mittels eines elektronischen Netzschalters ausgeschaltet ist, ist aus der Druckschrift EP-A2-0 436 515 bekannt. Das Gerät weist einen Fernbedienempfänger auf, der einem IR-Empfänger und einen Signal-Prozessor mit einem ersten Dekoder enthält, der ausschließlich zum Dekodieren des Ein-/Ausschalt-Signals vorgesehen ist. Der Fernbedienempfänger wird von einem transformatorlosen Bereitschaftsnetzteil gespeist, welches einen Brückengleichrichter, der über einen kapazitiven Vorwiderstand mit dem Netz verbunden ist, und einen Spannungsstabilisator enthält. Auf diese Weise ist der Fernbedienempfänger direkt mit dem Netz verbunden. Der Signal-Prozessor schaltet beim Eintreffen eines entsprechenden Fernbediensignals das Schaltnetzteil mittels eines Optokopplers und eines Triacs ein.
Im Wartebetrieb werden für die Bereitschaft des Fernbedienempfängers etwa 0,2 Watt elektrische Leistung benötigt.

Von Nachteil ist jedoch, daß infolge der galvanischen Verbindung des Fernbedienempfängers zum Energienetz der Signal-Prozessor mit dem ersten Dekoder nicht zum Auswerten der übrigen Fernbediensignale benutzt werden kann. Zum Auswerten dieser Signale sind zusätzlich ein Optokoppler und ein Fernbedienprozessor mit einem zweiten Dekoder erforderlich, die mit der Sekundärseite des Netzteils verbunden sind und somit isoliert vom Energienetz angeordnet ist.
Darüber hinaus muß das transformatorlose Netzteil einen Betriebsstrom von solch einer Größe aufbringen, daß beim Berühren von stromführenden Teilen des Empfangsteils für Fernbediensignale für Mensch und Tier eine Gefahr besteht und deshalb zusätzliche Maßnahmen zum Schutz vor dem ungewollten Berühren benötigt werden.

Aus dem Dokument EP-A2 0 598 267 ist ein Schaltnetzteil für ein Fernsehgerät bekannt, bei dem während des Wartebetriebs zwar die primäre Netzteilschaltung, die unter anderem einen ersten Brückengleichrichter, den Schalttransistor des Schaltnetzteils sowie die Entmagnetisierung für die Bildröhre enthält, die ständig mit dem Energienetz verbunden sind, jedoch über eine Ansteuerschaltung stromlos geschaltet sind.
Die primäre Netzteilschaltung enthält einen Fernbedienempfänger mit einem IR-Empfänger und einem ersten Dekoder, der ausschließlich Fernbediensignale zum Umschalten zwischen Betriebszustand und Wartebetrieb erkennt.
Beim Eintreffen des entsprechenden Ein/Aus-Signals schaltet der Dekoder die Ansteuerschaltung des Schaltnetzteils zwischen einem aktiven und einem stromlosen Zustand um und übernimmt während des Startens des Schaltnetzteils deren Stromversorgung. Während des Startens werden Fernbedienempfänger und die Ansteuerschaltung ebenfalls aus einem transformatorlosen Bereitschaftsnetzteil versorgt, das einen zweiten Brückengleichrichter aufweist, der über zwei kapazitive Vorwiderstände mit dem Netz und ausgangsseitig mit einem Ausgang des ersten Brückengleichrichters verbunden ist.

Auch bei dieser Lösung ist von Nachteil, daß der Fernbedienempfänger für das Ein/Aus-Signal auf der Primärseite des Netzteils angeordnet ist und für die restlichen Fernbediensignale ein Fernbedienprozessor mit einem zweiten Fernbedienempfänger und einem zweiten Dekoder benötigt werden.
Weiterhin ist nachteilig, daß während des Wartebetriebs die Empfangseinrichtung und die primäre Netzteilschaltung ständig mit dem Energienetz verbunden sind. Dieses verringert die Betriebszuverlässigkeit und die betreffendenen Teile sind im Gerät vor ungewolltem Berühren, beispielsweise beim Service, zu sichern.

Aus der Gebrauchsmusterschrift DE-U1-93 09 814 sind Schaltungen für einen fernbedienbaren elektrischen Verbraucher bekannt, bei dem während des Wartebetriebs ebenfalls die primäre Netzteilschaltung zwar ständig mit dem Energienetz verbunden jedoch stromlos gehalten wird, so daß keine elektrische Energie zur primären Netzteilschaltung übertragen wird. Ein IR-Detektor und ein Dekoder sind sekundärseitig vom Netzteils angeordnet und nur der IR-Detektor wird mittels eines transformatorlosen Bereitschaftsnetzteils empfangsbereit gehalten, so daß der Dekoder im Wartebetrieb keine Betriebsspannung erhält. Beim Eintreffen von IR-Wechsellicht aktiviert der IR-Detektor den Dekoder und versorgt diesen mit Betriebsenergie aus dem Bereitschaftsnetzteil. Beim Erkennen eines Einschaltsignals aktiviert der Dekoder das Netzteil.
In einer Ausführungsform wird der IR-Detektor durch kapazitive Spannungsteilung und Gleichrichtung aus dem Strompfad der sogenannten Y-Kondensatoren versorgt, die zur Funkentstörung die Netzanschlüsse mit dem sekundärseitigen Masseanschluß des Verbrauchers verbinden.
Dafür ist zwischen dem Fußpunkt eines Y-Kondensators und einem sekundärseitigen Masseanschluß ein weiterer Kondensator angeordnet, so daß ein kapazitiver Spannungsteiler entsteht. Die Wechselspannung, die am zusätzlichen Kondensator anliegt, wird über einen Einweggleichrichter mit einem Ladekondensator gleichgerichtet und geglättet. Auf diese Weise steht eine Ggleichspannung zur Verfügung, die mit dem sekundärseitigen Masseanschluß verbunden ist.

Bei dieser Lösung sind zwar der IR-Detektor und der Dekoder sekundärseitig angeordnet, und der Dekoder kann auch für andere Funktionseinheiten benutzt werden, jedoch ist ebenso wie bei der vorgenannten Lösung nachteilig, daß die primärseitige Schaltung des Netzteils, wie Gleichrichter, Schalttransistor und Steuereinrichtung, während des Wartebetriebs ständig mit dem Energienetz verbunden sind.

Obwohl die Schaltung für den IR-Detektor bei den genannten Lösungen hochohmig realisiert werden kann, ist zum Starten des Netzteils für einen Zeitraum von mindestens 100 Millisekunden ein Betriebsstrom in der Größenordnung von etwa 10 mA nötigt. Dieser Strom wird allein für den Betrieb des IR-Detektors und zum Betätigen eines Netzschalters benötigt und kann nicht direkt vom transformatorlosen Netzteil aufgebracht werden, weil damit die Kapazitätswerte der Y-Kondensatoren unzulässig hoch werden würden. Um mit den Y-Kondensatoren eine erforderliche Entstörwirkung im HF-Bereich zu erreichen und dabei eine Gefahr oder einen spürbaren Berührungsstrom für den Benutzer zu vermeiden, kann für die Y-Kondensatoren im Gerät maximal eine solche Kapazität gewählt werden, bei der ein Blindstrom von etwa 50 µA nicht überschritten wird. Damit muß während des Einschaltens des Gerätes die erforderliche Energiemenge aus einer Pufferkapazität bereitgestellt werden.

Die Praxis hat gezeigt, daß es bei der bekannten Lösung sehr schwierig ist, den kapazitiven Spannungsteiler und die Pufferkapazität so zu dimensionieren, daß jederzeit ausreichend elektrische Energie zum Starten des Netzteils zur Verfügung steht. Dieses wird bei der bekannten Schaltung dadurch erschwert, daß zusätzlich zum Betriebsstrom des IR-Detektors ein erheblicher Querstrom als Ladestrom zur Fußpunktkapazität des kapazitiven Spannungsteilers und zur parallel liegenden Gleichrichterschaltung fließt, der weder für den direkten Betrieb des IR-Detektors noch zum Aufladen der entsprechenden Pufferkapazität genutzt werden kann. Im Ergebnis dessen nimmt die Ladezeitkonstante zum Aufladen der Pufferkapazität einen Wert an, der weit oberhalb einer Minute liegt. Das heißt, wenn die Pufferkapazität entladen ist, kann der Dekoder erst nach dieser Zeit ein Ein/Aus-Signal erkennen. Dieses ist zum Beispiel zum Detektieren von kurz aufeinanderfolgenden IR-Signalen oder nach dem Betätigen des Netzhauptschalters, mit dem das Gerät vom ausgeschalteten Zustand in den Wartebetrieb versetzt wird und somit an Netzspannung gelegt wird, ein beachtlicher Mangel und für die Praxis völlig unakzeptabel, da vor diesem Zeitpunkt das Gerät auf keine Fernbediensignale reagiert.

Ausgehend von diesem Mangel ist es Aufgabe der Erfindung Mittel aufzuzeigen, mit denen mit einem extrem geringen Blindstrom im Strompfad der genannten Y-Kondensatoren eine Betriebsspannung zum Starten eines Netzteils möglich ist und die genannten Mängel der bekannten Lösungen vermieden werden.

Zur Lösung der Aufgabe geht die Erfindung von einem fernbedienbaren elektronischen Gerät mit einem Netzteil aus, das eine primärseitige und eine sekundärseitige Netzteilschaltung aufweist. Im Gerät sind sekundärseitig angeordnet:
ein Fernbedienempfänger für Fernbediensignale, der während eines ersten Wartebetriebszustandes aus einem transformatorlosen Bereitschaftsnetzteil gespeist wird, das die zur Funkentstörung vorhandenen Y-Kondensatoren nutzt und
ein Signalprozessor mit einem Dekoder zum Identifizieren der Fernbediensignale, zum Ein- und Ausschalten des Gerätes und Steuern von anderen Gerätefunktionen, der während des ersten Wartebetriebszustandes ohne Betriebsspannung ist.

Erfindungsgemäß ist der Fernbedienempfänger über eine Schaltstufe mit Steuereingängen eines elektronischen Netzschalters verbunden, um beim Eintreffen von Fernbediensignalen das Gerät in einen zweiten Wartebetriebszustand zu schalten, in dem die primärseitige Netzteilschaltung mit dem Energienetz verbunden ist und der Signalprozessor mit dem Dekoder Betriebsenergie erhält.
Der Fernbedienempfänger ist so beschaffen, daß er bereits mit einem sehr geringen Betriebsstrom von etwa 50 µA ein Fernbediensignal unabhängig von seinem Inhalt erkennt.

Der Fernbedienempfänger wird kapazitiv, direkt von der Netzspannung mit Betriebsspannung versorgt. Dazu werden zwei Y-Kondensatoren benutzt, die üblicherweise als Funkentstörkondensatoren von den Netzeingängen zum isolierten Massepotential der sekundären Netzteilschaltung geschaltet sind. Die masseseitigen Anschlüsse dieser Kondensatoren sind erfindungsgemäß mit den Wechselspannungseingängen eines Brückengleichrichters verbunden, der mit einem Gleichspannungsausgang an das isolierte Massepotential der sekundären Netzteilschaltung angeschlossen ist. An den Gleichspannungsausgängen des Brückengleichrichters liegt eine Pufferkapazität.

Die Kapazitäten sind derart dimensioniert und aufgebaut, daß ein Blindstrom durch jede Kapazität den maximal zulässigen Berührungsstromwert gemäß den Sicherheitsbestimmungen für den Berührungsschutz von elektrischen Geräten nicht überschreitet, um eine Gefahr für das Leben von Mensch und Tier durch das Berühren von leitenden Teilen des Gerätes zu vermeiden.

Die Lösung dieser Erfindung geht von zwei an sich bekannten Ausstattungsmerkmalen für elektronische Geräte aus.
Zum ersten sind Schaltungen zum Empfangen und Auswerten von Infrarotsignalen bekannt, die es ermöglichen, den Fernbedienempfänger eines Gerätes ohne den Signalprozessor für die Fernbediensignale gesondert mit einem Bereitschaftsnetzteil zu betreiben, wobei der Fernbedienempfänger einen extrem geringen Betriebsstrom benötigt und während des Wartebetriebs als einzige Baugruppe mit einer Betriebsstromquelle verbunden ist. Ein solcher Fernbedienempfänger ist zum Beispiel in der Patentanmeldung DE-P 44 03 985 beschrieben, die zum Zeitpunkt der prioritätsbegründenden Anmeldung noch nicht veröffentlicht ist.
Zum anderen ist es bei elektronischen Geräten zum Reduzieren von Störstrahlung, die z. B. von Schaltnetzteilen verursacht wird, erforderlich, zwischen den Netzeingängen und dem isolierten Massepotential der sekundären Netzteilschaltung Kondensatoren zu schalten, die als sogenannte "Y"-Kondensatoren für Hochfrequenz geeignet sind und aus Sicherheitsgründen eine entsprechende Durchschlagsfestigkeit aufweisen. Diese Kondensatoren sind meist keramische Kondensatoren und dürfen aus Gründen der Berührungsschutzsicherheit des Gerätes eine Kapazität von 5 nF nicht überschreiten.

Wenn in die gemeinsame Masseleitung dieser Kondensatoren erfindungsgemäß ein Brückengleichrichter geschaltet wird, kann mit dem Blindstrom dieser Kondensatoren das Gerät mit geringem Mehraufwand betriebsbereit gehalten und ein Pufferspeicher geladen werden, ohne daß der Isolationszustand der sekundären Netzteilschaltung verändert wird.

Eine besonders vorteilhaften Weiterbildung der Erfindung geht von der Erkenntnis aus, daß die im Pufferspeicher verfügbare Energie besser ausgenutzt wird, wenn als elektronischer Netzschalter ein Halbleiterschalter genutzt wird, wie zum Beispiel ein Thyristors oder ein Triac, der innerhalb der positiven und negativen Halbwellen durch Triggerimpulse geschlossen werden kann und den Stromfluß bis zum Ende der Halbwelle eigenständig aufrecht erhält. Dafür ist die Schaltstufe, die zwischen dem Fernbedienempfänger und dem elektronischen Netzschalter angeordnet ist, zum Erzeugen einer gepulsten Ausgangsspannung ausgelegt. Es sind grundsätzlich zwei Methoden zum Triggern des Netzschalters möglich.
Einerseits kann die Schaltstufe mit der Netzfrequenz synchronisiert werden und generiert nach jedem Nulldurchgang einen kurzen Triggerimpuls pro Halbwelle der Netzspannung. Andererseits kann die Schaltstufe eine von der Phasenlage der Netzspannung unabhängige gepulste Ausgangsspannung erzeugen, die pro Halbwelle mehrere kurze Impulse aufweist, so daß ein sicheres Schließen des Netzschalters in jeder Halbwelle gewährleistet ist.
In beiden Fällen kann vorteilhaft ein Tastverhältnis von größer als 1:5 benutzt werden und damit der Energiebedarf aus der Pufferkapazität wesentlich gesenkt werden.

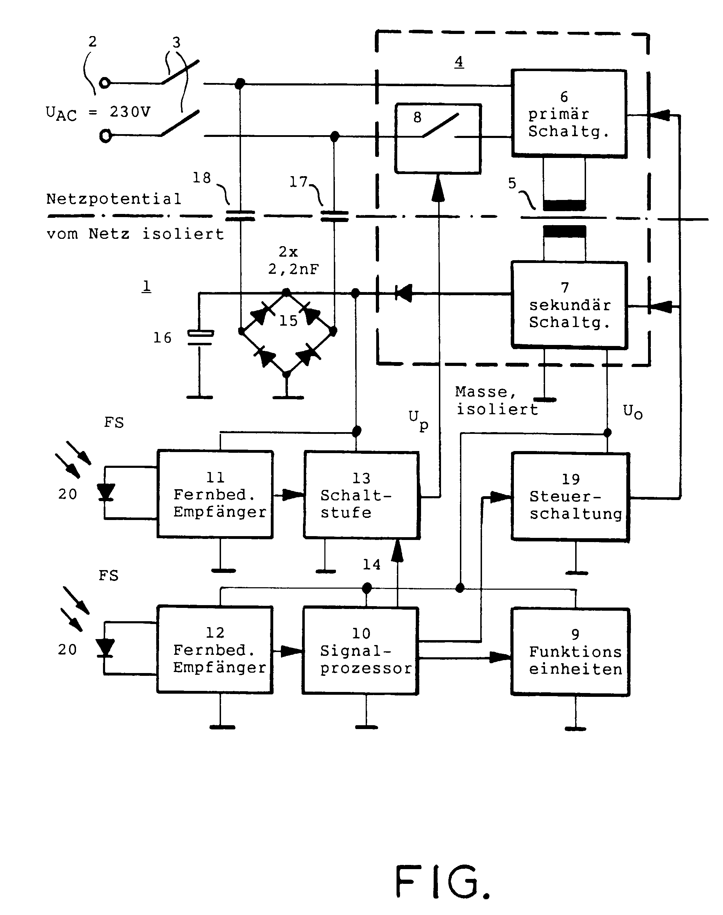

Die Erfindung wird nachfolgend anhand von vorteilhaften Ausführungsbeispielen näher erläutert. Die Erfindung ist jedoch nicht auf diese Ausführungsbeispiele beschränkt. In der Figur ist das Netzteil eines fernbedienbaren Gerätes gemäß der Erfindung mit einem Transformator schematisch dargestellt.
Das elektronische Gerät 1, das in diesem Fall ein Fernsehgerät ist, ist über Netzeingänge 2, dem üblicherweise ein Netzschalter 3 zum Realisieren des ausgeschalteten Zustands vorgeschaltet ist, mit einer Netzspannung U_{AC} verbunden. Zum Umwandeln und Gleichrichten der Netzspannung U_{AC} ist ein Netzteil 4 mit einem Transformator 5 vorhanden. Dieses überträgt die Netzspannung U_{AC} von der primären Netzteilschaltung 6 auf die sekundäre Netzteilschaltung 7, die vom örtlichen Energienetz galvanisch getrennt ist. In der sekundären Netzteilschaltung 7 werden die benötigten verschiedenen Betriebsspannungen für das Gerät erzeugt und gleichgerichtet. Das Netzteil 4 kann mittels eines elektronisch steuerbaren Netzschalters 8 über einen Stelleingang aus- und eingeschaltet werden und stellt für die Funktionseinheiten 9 des Gerätes 1 Betriebsspannungen bereit.

Ist der Netzschalterschalter 8 geöffnet, sind alle Betriebsspannungen gleich Null.
Ein Signalprozessor 10, der seine Betriebsspannung Uₒ aus der sekundären Netzteilschaltung 7 erhält, übernimmt das Identifizieren und Dekodieren aller empfangenen Fernbediensignale FS und steuert entsprechend alle Betriebsfunktionen des Gerätes 1.
In der Ausführungsform der Erfindung, wie sie in der Figur dargestellt ist, sind im Gerät 1 ein erster Fernbedienempfänger 11 und ein zweiter Fernbedienempfänger 12 für Fernbediensignale FS vorhanden, die beide mit dem Signalprozessor 10 leitend verbunden sind.

Im Gegensatz zum zweiten Fernbedienempfänger 12, welcher eine hohe Arbeitsgeschwindigkeit und aufwendige Mittel zum selektiven Verstärken und zum sicheren Erkennen und Dekodieren der Fernbediensignale FS aufweist, enthält der erste Fernbedienempfänger 11 eine Schaltstufe 13 und ist vorrangig für einen extrem niedrigen Strombedarf ausgelegt. Der Fernbedienempfänger 11 weist dadurch eine niedrige Arbeitsgeschwindigkeit auf und besitzt einfache Mittel zum Erkennen von Infrarotsignalen und zum Unterdrücken des Einflusses von Umgebungslicht. Er muß nicht in der Lage sein, die als kodierte Lichtimpulse übertragenen Fernbediensignale FS richtig zu erkennen. Für die Funktion der Schaltung reicht es aus, wenn der Fernbedienempfänger 11 kodierte Infrarotsignale unabhängig von deren Signalinhalt vom vorhandenen Umgebungslicht unterscheiden kann und beim Eintreffen über die Schaltstufe 13 ein Schaltsignal erzeugt. Der Ausgang der Schaltstufe 13 ist mit dem Stelleingang des Netzschalters 8 verbunden.
Darüber hinaus weist der erste Fernbedienempfänger 11 einen Rückmeldeeingang 14 auf, über den der Netzschalter 8 ohne Fernbediensignal FS im Einschaltzustand gehalten werden kann.

Der zweite Fernbedienempfänger 12 wird aus der sekundären Netzteilschaltung 7 mit Betriebsspannung Uₒ versorgt. Im Gegensatz dazu ist der erste Fernbedienempfänger 11 über eine Diode sowohl mit der Betriebsspannung Uₒ als auch über einen Brückengleichrichter 15, der eine Pufferkapazität 16 enthält, und über die Kapazitäten 17 und 18 mit dem Netzeingang verbunden. Die Kapazitäten 17 und 18 werden im Beispiel von zwei HF-Entstörkondensatoren mit einer hohen Durchschlagsfestigkeit und einer Kapazität von jeweils 2,2 nF gebildet.

Ein an sich bekannter Fernbediengeber, der in der Figur nicht dargestellt ist, überträgt während der Zeit, in der ein Benutzer eine Taste betätigt, mit fortlaufenden Wiederholungen ein Fernbediensignal FS, das eine Geräteadresse und einen Befehl zum Auslösen einer entsprechenden Betriebsfunktion enthält. Das Fernbediensignal FS kann im Wartebetrieb nur vom ersten Fernbedienempfänger 11 empfangen werden, weil dieser gemeinsam mit der Schaltstufe als einzige Baugruppe über die Kapazitäten 17 und 18 mit Betriebsspannung versorgt wird. Während dieser Zeit befindet sich das Gerät in einem ersten Wartebetriebszustand, in dem nur der Fernbedienempfänger extrem geringe elektrische Energie benötigt, die unterhalb von 100 µW liegt.

Beim Eintreffen eines Fernbediensignals FS schließt unabhängig von der Bedeutung und der Geräteadresse des Kodewortes die Schaltstufe 13 des Fernbedienempfängers 11 den Netzschalter 8 für eine Haltezeit, die etwa der Dauer entspricht, die das Netzteil 4 zum Anlaufen benötigt. Damit wird das Netzteil 4 des Gerätes 1 an die Netzspannung U_{AC} geschaltet und über eine Steuerschaltung 19 zunächst in einen Kontrollzustand mit geringer Leistungsaufnahme geschaltet, bei dem es im wesentlichen nur eine Betriebsspannung für den Signalprozessor 10 und den zweiten Fernbedienempfänger 12 bereitstellt.

Dieser Kontrollzustand stellt einen zweiten Wartebetriebszustand dar, bei dem das Netzteil 4 etwa 5 Watt elektrische Leistung aus dem Energienetz entnimmt. Dadurch ist der Signalprozessor 10 und der zweite Fernbedienempfänger 12 betriebsbereit, um die Wiederholungen des Fernbediensignals FS zu empfangen und das Kodewort, welches das Fernbediensignal FS enthält, zu dekodieren. Entsprechen dabei Adresse und Inhalt dem Kodewort, welches zum Einschalten des Gerätes benötigt wird, so schaltet der Signalprozessor 10 das Netzteil 4 auf volle Leistungsfähigkeit. Dieses stellt nun auch die Betriebsspannungen für alle Funktionseinheiten 9 des Gerätes 1 bereit. Das Gerät 1 befindet sich im aktiven Betriebszustand. Über den Rückmeldeeingang 14 wird der Fernbedienempfänger 11 mit einer Schaltspannung aus dem Signalprozessor versorgt, und damit der Netzschalter 8 ohne Fernbediensignal FS im Einschaltzustand gehalten.

Auf diese Weise erhalten der Signalprozessor 10 und der zweite Fernbedienempfänger 12, die in der Regel relativ viel Betriebsleistung benötigen, im Wartebetrieb keinen Betriebsstrom.

Der Netzschalter 8 ist ein Triac, das innerhalb der positiven und negativen Halbwelle durch Triggerimpulse geschlossen wird und den Stromfluß bis zum Ende der Halbwelle eigenständig aufrecht erhält. Dafür ist die Schaltstufe 13 zum Erzeugen einer gepulsten Ausgangsspannung Uₚ ausgelegt. Die Schaltstufe 13 erzeugt unabhängig von der Phasenlage der Netzspannung eine gepulste Ausgangsspannung Uₚ mit Pulsabständen von etwa 4 Millisekunden. Damit werden für den Netzschalter 8 pro Halbwelle der Netzspannung zwei bis drei kurze Triggerimpulse bereit gestellt, so daß ein sicheres Schließen des Netzschalters in jeder Halbwelle gewährleistet ist. Die Schaltstufe erzeugt die gepulste Ausgangspannung Uₚ für eine Dauer von etwa 4 bis 6 Perioden der Netzspannung U_{AC}, wenn der Fernbedienempfänger 11 ein gepulstes IR-Lichtsignal empfängt.

Die gepulste Ausgangsspannung Uₚ wird über ein Koppelglied, das eine galvanische Trennung realisiert, wie zum Beispiel einen Optokoppler oder einen Impulsübertrager zum Netzschalter 8 übertragen, welcher galvanisch mit der primären Netzteilschaltung 6 verbunden ist.
Die Schaltstufe 13 kann in energiearmer C-MOS-Technologie ausgeführt werden. Auf diese Weise kann der Netzschalter 8 mit einem mittleren Energiebedarf, der annähernd auf das Tastverhältnis gesenkt wurde, sicher betätigt werden.

Der Netzschalter 8 kann vorteilhaft mit Verzögerungsmitteln zum Verzögern des Zurückschaltens ausgestattet sein. Diese stellen sicher, daß das Netzteil 4 während des Startens bis zur Funktion des Signalprozessors 10 unabhängig von der Bedeutung des Fernbediensignals FS mit Netzspannung U_{AC} versorgt wird.

Vom Fernbedienempfänger 11 werden alle Fernbediensignale FS erkannt und selektiert, die aus Impulspaketen, beispielsweise mit einer Pulsfrequenz von etwa 38 kHz und einer Taktfrequenz von etwa 3 kHz bestehen. Diese sind mit relativ einfachen Mitteln, wie Filter und Integratoren, die im Fernbedienempfänger 11 angeordnet sind, von anderen, störenden Lichtquellen zu selektieren.

Beim Umschalten des Gerätes 1 vom aktiven Betriebszustand in den Wartebetrieb wird das Fernbediensignal FS vom ersten und zweiten Fernbedienempfänger 11 und 12 empfangen. Der Fernbedienempfänger 12 leitet das empfangene Fernbediensignal FS unmittelbar an den Signalprozessor 10 weiter und dieser bewirkt ein Ausschalten des Netzteils 4.
Das Gerät stellt seinen Betrieb ein. Damit bricht auch die Schaltspannung am Rückmeldeeingang 14 des Fernbedienempfängers 11 zusammen und die Schaltstufe öffnet den Netzschalter 8. Das Netzteil 4 wird von der Netzspannung U_{AC} abgeschaltet.

Der Fernbedienempfänger 11 im Gerät reagiert unabhängig von der Bedeutung und der Geräteadresse eines Kodewortes auf den Empfang von verschiedenen Fernbediensignalen FS und bewirkt jedesmal, daß für die Zeit der Betätigung eines Fernbediengebers der Netzschalter 8 geschlossen wird, sofern dieses nicht schon geschehen ist.
Erhält der Signalprozessor jedoch ein falsches Kodewort, weil z. B. das ausgesandte Signal ein anderes Gerät betrifft, so unterbleibt folgerichtig das Einschalten des Gerätes. Das bedeutet, wenn der Fernbedienempfänger 11 Signale erhält, die das nachgeschaltete Gerät nicht betreffen, wird das Gerät nur für die kurze Haltezeit in den Kontrollzustand zum Prüfen der Fernbediensignale FS versetzt, ohne daß das Gerät vollständig in Betrieb genommen wird.

Ein wesentlicher Vorteil der Erfindung besteht darin, daß der Signalprozessor 10 keine galvanische Verbindung zur Netzspannung U_{AC} aufweist, und damit ohne zusätzliche Mittel zur Potentialtrennung alle Funktionseinheiten 9 des Gerätes steuern kann.

Das Reagieren auf ein Fernbediensignal FS erfolgt immer erst nach dem Dekodieren im Signalprozessor 10, der im Moment des Einschaltens des Fernsehempfängers nicht mit Betriebsstrom versorgt wird. Damit muß die Stromversorgung vom Fernbedienempfänger 12 nur für wenige Sekunden einen Strom von einigen Milliampere zum Betätigen des Netzschalters 8 aufbringen und dieser kann der Pufferkapazität 16 entnommen werden.

Dieses hat den Vorteil, daß das Gerät für den Wartebetrieb extrem stromsparend ausgeführt werden kann. Der mittlere Energiebedarf im Wartebetrieb beträgt etwa 100 Milliwatt, so daß im Wartebetrieb nur unbedeutend Energie von außen zugeführt werden muß.

Entsprechend einer Weiterentwicklung ist es von Vorteil, für den Fernbedienempfänger 11 eine Empfängerschaltung zu verwenden, deren Arbeitsgeschwindigkeit in Abhängigkeit von der Betriebsspannungsversorgung umschaltbar ist. Auf diese Weise kann der Fernbedienempfänger 12 die Funktionen des Fernbedienempfängers 11 mit übernehmen und letzterer entfallen.

## Patentansprüche

1. Fernbedienbares elektronisches Gerät mit einem Netzteil (4), das eine primäre und eine sekundäre Netzteilschaltung (6, 7) aufweist,
bei dem mit der sekundären Netzteilschaltung (7) elektrisch verbunden sind:
ein Fernbedienempfänger (11) mit einer Schaltstufe (13), der während eines ersten Wartebetriebszustandes Blindströme im Strompfad von Funkentstör-Y-Kondensatoren (17, 18) zur Versorgung mit Betriebsstrom von den Netzeingängen (2) nutzt, der bereits mit einem sehr geringen Betriebsstrom von etwa 50 µA ein Fernbediensignal unabhängig von seinem Inhalt erkennt und der während des Wartebetriebs als einzige Baugruppe mit einer Betriebsstromquelle verbunden ist
und ein Signalprozessor (10) zum Identifizieren von Fernbediensignalen, zum Ein- und Ausschalten des Gerätes und zum Steuern von anderen Gerätefunktionen, der seine Betriebsspannung (U₀) aus der sekundären Netzteilschaltung (7) erhält und während des ersten Wartebetriebszustandes ohne Betriebsspannung ist,
wobei der Fernbedienempfänger (11) über die Schaltstufe (13) mit einem elektronischen Netzschalter (8) verbunden ist, um beim Eintreffen von Fernbediensignalen (FS) das Gerät in einen zweiten Wartebetriebszustand zu schalten, in dem das Netzteil (4) mit dein Energienetz (2) verbunden ist und der Signalprozessor (10) Betriebsenergie erhält.

2. Fernbedienbares Gerät nach Anspruch 1, dadurch gekennzeichnet, daß der elektronische Netzschalter (8) ein Halbleiterschalter ist, der innerhalb der positiven und negativen Halbwellen der Netzspannung (U _{AC}) durch Triggerimpulse geschlossen werden kann und den Stromfluß bis zum Ende der Halbwelle eigenständig aufrecht erhält und die Schaltstufe (13) eine gepulste Ausgangsspannung (Up) zum Triggern des Netzschalters (8) erzeugt.

3. Fernbedienbares Gerät nach Anspruch 2,
**dadurch gekennzeichnet**, daß die Schaltstufe (13) mit der Frequenz der Netzspannung (U_{AC}) synchronisiert wird und nach jedem Nulldurchgang der Netzspannung (U_{AC}) einen kurzen Triggerimpuls pro Halbwelle der Netzspannung generiert.

4. Fernbedienbares Gerät nach Anspruch 2,
**dadurch gekennzeichnet**, daß die Schaltstufe (13) eine von der Phasenlage der Netzspannung (U_{AC}) unabhängige gepulste Ausgangsspannung (Uₚ) erzeugt, die pro Halbwelle der Netzspannung (U_{AC}) mehrere kurze Impulse aufweist, so daß ein sicheres Schließen des Netzschalters (8) in jeder Halbwelle gewährleistet ist.

5. Fernbedienbares Gerät nach Anspruch 2,
**dadurch gekennzeichnet**, daß die gepulste Ausgangsspannung (Uₚ) ein Tastverhältnis von größer als 1:5 aufweist.

6. Fernbedienbares Gerät nach Anspruch 1,
**dadurch gekennzeichnet**, daß als Betriebsstromquelle für den Fernbedienempfänger (11) ein Brückengleichrichter (15) vorhanden ist, dessen Wechselspannungseingänge über Kapazitäten (17, 18) mit den Netzeingängen (2) und dessen erster Gleichstromausgang mit dem isolierten Massepotential der sekundären Netzteilschaltung (7) und dessen zweiter Gleichstromausgang mit dem Fernbedienempfänger (11) verbunden sind, wobei die Kapazitäten (17, 18) derart dimensioniert und aufgebaut sind, daß ein von der Netzspannung (U_{AC}) verursachter Blindstrom durch die Kapazitäten (17, 18) den maximal zulässigen Berührungsstromwert, der sich aus den Sicherheitserfordernissen für den Berührungsschutz von elektrischen Geräten ergibt, nicht überschreitet.

7. Fernbedienbares Gerät nach Anspruch 1,
**dadurch gekennzeichnet**, daß die Kapazitäten (17, 18) Funkentstörkondensatoren sind, deren Kapazitätswert in Energienetzen mit einer Netzspannung von 230 V unterhalb von 5 nF liegt.

8. Fernbedienbares Gerät nach Anspruch 1,
**dadurch gekennzeichnet**, daß der Fernbedienempfänger (11) beinhaltet:
- einen Empfangsverstärker für Fernbediensignale (FS) mit einem Infrarotsensor (20)
- Selektionsmittel zum Unterdrücken des Einflusses von störendem Licht
- einen Detektor zum Erkennen der Fernbediensignale (FS)
- eine Schaltstufe (13) mit einem Ausgang für ein Schaltsignal, das vom Fernbediensignal (FS) abhängt,
- und einen Rückmeldeeingang (14), über den das Schaltsignal am Ausgang der Schaltstufe (13) einstellbar ist.

9. Fernbedienbares Gerät nach Anspruch 1,
**dadurch gekennzeichnet**, daß der Signalprozessor (10) mit dem Signalausgang eines zweiten Fernbedienempfängers (12) verbunden ist, der gegenüber dem ersten Fernbedienemfpänger (11) eine höhere Arbeitsgeschwindigkeit und Mittel zur besseren Signalregenerierung aufweist und der während des Wartebetriebs stromlos geschaltet ist.

## Claims

1. Remote-controllable electronic appliance having a mains section (4) with a primary and a secondary mains-section circuit (6, 7), in which the following are electrically connected to the secondary mains-section circuit (7):
a remote-control receiver (11) having a switching stage (13) which, during a first standby mode, utilizes wattless currents in the current path of radio interference suppression Y capacitors (17, 18) to supply operating current from the mains inputs (2), which remote-control receiver detects a remote-control signal regardless of its input even with a very low operating current of about 50 µA and is connected to an operating current source during standby operation as a single assembly
and a signal processor (10) for identifying remote-controlled signals for switching the appliance on and off and for controlling other appliance functions, which signal processor receives its operating voltage (U₀) from the secondary mains-section circuit (7) and is without operating voltage during the first standby mode,
wherein the remote-control receiver (11) is connected via the switching stage (13) to an electronic mains switch (8) in order to switch the appliance on receiving remote-control signals (FS) to a second standby mode in which the mains section (4) is connected to the power mains (2) and the signal processor (10) receives operating power.

2. Remote-controllable appliance according to Claim 1, characterized in that the electronic mains switch (8) is a semiconductor switch which can be closed by triggering pulses within the positive and negative half-waves of the mains voltage (U_{AC}) and maintains the current flow independently up to the end of the half-wave and the switching stage (13) generates a pulsed output voltage (Up) for triggering the mains switch (8).

3. Remote-controllable appliance according to Claim 2, characterized in that the switching stage (13) is synchronized with the frequency of the mains voltage (U_{AC}) and generates a short triggering pulse for each half-wave of the mains voltage after every passage of the mains voltage (U_{AC}) through zero.

4. Remote-controllable appliance according to Claim 2, characterized in that the switching stage (13) generates a pulsed output voltage (Uₚ) which is independent of the phase position of the mains voltage (U_{AC}) and which exhibits a plurality of short pulses for each half-wave of the mains voltage (U_{AC}) so that a reliable closure of the mains switch (8) is ensured in each half-wave.

5. Remote-controllable appliance according to Claim 2, characterized in that the pulsed output voltage (Uₚ) has a duty factor of more than 1:5.

6. Remote-controllable appliance according to Claim 1, characterized in that there is present as operating current source for the remote-control receiver (11) a bridge rectifier (15) whose alternating-voltage inputs are connected via capacitors (17, 18) to the mains inputs (2) and whose first direct-current output is connected to the isolated chassis potential of the secondary mains-section circuit (7) and whose second direct-current output is connected to the remote-control receiver (11), the capacitors (17, 18) being dimensioned and constructed in such a way that a wattless current produced by the mains voltage (U_{AC}) through the capacitors (17, 18) does not exceed the maximum permissible contact current value which results from the safety requirements for shock protection of electrical appliances.

7. Remote-controllable appliance according to Claim 1, characterized in that the capacitors (17, 18) are radio interference suppression capacitors whose capacitance value is below 5 nF in power mains having a mains voltage of 230 V.

8. Remote-controllable appliance according to Claim 1, characterized in that the remote-control receiver (11) contains:
- a reception amplifier for remote-control signals (FS) having an infrared sensor (20),
- selection means for suppressing the influence of interfering light,
- a detector for detecting the remote-control signals (FS),
- a switching stage (13) having an output for a switching signal which depends on the remote-control signal (FS),
- and a checkback input (14) via which the switching signal at the output of the switching stage (13) can be adjusted.

9. Remote-controllable appliance according to Claim 1, characterized in that the signal processor (10) is connected to the signal output of a second remote-control receiver (12) which has a higher operating speed and better signal regenerating means compared with the first remote-control receiver (11) and which is de-energized during the standby mode.

## Revendications

1. Appareil électronique pouvant être télécommandé ayant un bloc d'alimentation (4) qui comprend un circuit d'alimentation primaire et un circuit d'alimentation secondaire (6, 7), dans lequel sont liés électriquement au circuit d'alimentation secondaire (7):
- un récepteur de télécommande (11) ayant un étage de commutation (13) qui, pendant un premier état de fonctionnement de veille exploite des courants réactifs (déwattés) dans le chemin de courant de condensateurs d'antiparasitage en Y (17, 18) pour l'alimentation en courant de fonctionnement depuis les entrées de l'alimentation (2), qui détecte un signal de télécommande indépendamment de son contenu, déjà avec un courant de fonctionnement très faible d'environ 50 µA et qui est le seul bloc à être relié à une source de courant de fonctionnement pendant le régime de veille
- et un processeur de signal (10) pour identifier les signaux de télécommande pour enclencher et déclencher l'appareil et pour commander d'autres fonctions de l'appareil, qui reçoit sa tension d'alimentation (U₀) du circuit d'alimentation secondaire (7) et qui est privé de tension d'alimentation pendant le premier état du fonctionnement de veille,
dans lequel le récepteur de télécommande (11) est lié par l'intermédiaire de l'étage de commutation (13) à un interrupteur d'alimentation électronique (8), afin d'enclencher l'appareil dans un deuxième état de fonctionnement de veille lors de l'arrivée de signaux de télécommande (FS), état dans lequel le bloc d'alimentation (4) est relié au réseau de distribution d'énergie (2) et le processeur de signal (10) reçoit son énergie de fonctionnement.

2. Appareil pouvant être télécommandé selon la revendication 1, caractérisé en ce que, l'interrupteur d'alimentation électronique (8) est un interrupteur à semiconducteur, qui peut être fermé par une impulsion de déclenchement pendant les demi-ondes positives et négatives de la tension d'alimentation (U_{AC}) et qui maintient de façon autonome le flux de courant jusqu'à la fin de la demi-onde, et l'étage de commutation (13) produit une tension de sortie pulsée (U_{P}) pour déclencher l'interrupteur d'alimentation (8).

3. Appareil pouvant être télécommandé selon la revendication 2, caractérisé en ce que l'étage de commutation (13) est synchronisé avec la fréquence de la tension d'alimentation (U_{AC}) et produit, à chaque passage par zéro de la tension d'alimentation (U_{AC}), une impulsion brève de déclenchement par demi-onde de la tension d'alimentation.

4. Appareil pouvant être télécommandé . selon la revendication 2, caractérisé en ce que, l'étage de commutation (13) produit une tension de sortie pulsée (U_{P}) indépendante de l'état de phase de la tension d'alimentation (U_{AC}), qui comporte plusieurs impulsions brèves par demi-onde de la tension d'alimentation (U_{AC}), de sorte à garantir une fermeture sûre de l'interrupteur d'alimentation (8) pendant chaque demi-onde.

5. Appareil pouvant être télécommandé selon la revendication 2, caractérisé en ce que, la tension de sortie pulsée (U_{P}) possède un rapport cyclique (taux d'impulsions) supérieur à 1:5.

6. Appareil pouvant être télécommandé selon la revendication 1, caractérisé en ce qu'un redresseur en pont (15) est prévu en tant que source de courant de fonctionnement pour le récepteur de télécommande (11), dont les entrées de tension alternative sont reliées par des condensateurs (17, 18) aux entrées d'alimentation (2) et dont la première sortie en courant continu est reliée au potentiel de masse isolé du circuit d'alimentation secondaire (7) et dont la deuxième sortie en courant continu est reliée au récepteur de télécommande (11), les condensateurs (17, 18) étant dimensionnés et constitués de sorte qu'un courant réactif produit par la tension d'alimentation (U_{AC}) ne dépasse pas la valeur de courant de contact maximale admissible qui est donnée par les exigences de sécurité pour la protection de contact d'appareils électriques.

7. Appareil pouvant être télécommandé selon la revendication 1, caractérisé en ce que les condensateurs (17, 18) sont des condensateurs de déparasitage, dont la valeur de capacité dans les réseaux de distribution d'énergie est supérieure à 5 nF avec une tension d'alimentation de 230 V.

8. Appareil pouvant être télécommandé selon la revendication 1, caractérisé en ce que le récepteur de télécommande (11) contient :
- un amplificateur de réception pour des signaux de télécommande (FS) avec un détecteur infrarouge (20)
- des moyens de sélection pour supprimer l'influence de la lumière parasite
- un détecteur pour la reconnaissance des signaux de télécommande (FS)
- un étage de commutation (13) avec une sortie pour un signal de commutation qui dépend du signal de télécommande (FS), et
- une entrée de rétroaction (14), par laquelle le signal de commutation au niveau de la sortie de l'étage de commutation (13) peut être ajusté.

9. Appareil pouvant être télécommande selon la revendication 1, caractérisé en ce que le processeur de signal (10) est relié à la sortie de signal d'un deuxième récepteur de télécommande (12), qui présente, par rapport au premier récepteur de télécommande (11), une vitesse de travail plus élevée et des moyens pour mieux régénérer le signal, et qui est commuté hors courant pendant le régime de veille.
